# EUROPEAN PATENT SPECIFICATION

(11) **EP 1 890 427 B1**
(45) Date of publication and mention of the grant of the patent: **28.10.2009**
(21) Application number: 06753119.4
(22) Date of filing: 07.07.2006
(51) Int. Cl.: H04L 12/26

(54) **A SYSTEM AND METHOD FOR MONITORING THE DEVICE PORT STATE**
SYSTEM UND VERFAHREN ZUR ÜBERWACHUNG DES ZUSTANDES EINES GERÄTEPORTS
SYSTEME ET PROCEDE DE SURVEILLANCE DE L'ETAT D'UN PORT DE DISPOSITIF

(30) Priority: 08.07.2005 CN 200510035915
(43) Date of publication of application: 20.02.2008
(73) Proprietor: Huawei Technologies Co., Ltd., Longgang District Shenzhen 518129 (CN)
(72) Inventor: XIONG, Wei, Huawei Administration Building, Shenzhen, Guangdong 518129 (CN); XIE, Liansheng, Huawei Administration Building, Shenzhen, Guangdong 51812 9 (CN); XIE, Xiqian, Huawei Administration Building, Shenzhen, Guangdong 518129 (CN)
(74) Representative: Körber, Martin Hans
(86) International application number: PCT/CN2006/001603
(87) International publication number: WO 2007/006214

(56) References cited:
- CN-A- 1 148 921
- CN-A- 1 512 712
- GB-A- 2 369 911
- US-A1- 2004 122 944
- US-A1- 2004 250 260
- ALEX AUDU ALCATEL USA INC RAM GOPAL NOKIA CHAOPING WU AZANDA NETWORK DEVICES: "ForwArding and Control ElemenT protocol (FACT); draft-gopal-forces-fact-02.txt" IETF STANDARD-WORKING-DRAFT, INTERNET ENGINEERING TASK FORCE, IETF, CH, no. 2, 1 November 2002 (2002-11-01), XP015013710 ISSN: 0000-0004

## Description

### Field of the Invention

The present invention relates to a network management method and system, more particularly, relates to a method and a system for monitoring a telecommunication device port in a network management system, and relates to an indicator status tracking module.

### Background of the Invention

A network management (NM) system is a software system for managing various telecommunication devices, by which the configuration, maintenance, monitoring, service distribution and performance analysis for a telecommunication device may be used visually, conveniently and efficiently. In the device and network maintenance work, it is important for a maintainer of telecommunication operator to know status of each port of the running device in real time. For example, each ordinary telephone user corresponds to one Public Switched Telephone Network (PSTN) port; when the user makes a telephone call, the port status is shown as "busy"; when the user hangs up, the port status is shown as "idle". The maintainer of telecommunication operator will know whether the operation of telecommunication network is normal rapidly by observing the operation state of various ports. Therefore, the network management system must be able to implement the function of knowing the operation condition of various ports on the network in real time. Because the operation ports (such as PSTN ports, Integrated Services Digital Network ports and x Digital Subscriber Line ports) are physically distributed everywhere, and the amount of the operation ports is enormous, it is a challenging task to set forth a solution for observing the status of each port in real time, visually and optionally.

At present, the operation state of each port, for example fault, idle, busy, activation, deactivation or the like, is generally represented by the color of the relevant indicator on the telecommunication device (or board). However, the above method has the following defects: it is impossible to concentratedly observe multiple ports because the physical locations of devices (or boards) are distributed; the indicator of device (or board) is unable to correspond to each port because the amount thereof is limited; it is impossible to optionally track ports, such as the port status of port in designated frame, and the port status of port in designated telephone number segment; it is impossible to directly obtain, from the designated indicator, the correlative information such as the telephone number, configured service type, L3/EF address, terminal type, terminal ID and port name etc corresponding to a failure port; and multiple tracking tasks are unable to exist simultaneously.

Besides, the status of each port may be indicated by setting an emulation panel on the network management system. However, the defect of the method is similar to that of directly observing the indicator of physical device. The method just can implement a concentrated observation of the indicator with different geographical location, but can not avoid other defects.

A window can be used to concentratedly display a specific type port of a device and the status thereof, for example, all information of PSTN ports is displayed in a table. The defect of the method includes: though the display for displaying the designated condition port may be filtered, it is impossible to start/stop tracking the status of the designated condition port because there is no concept of tracking task; for great capacity port data, messages indicating the port status or the change of the port status reported in real time, such as the Trap message of Simple Network Management Protocol (SNMP), have great flows, which influences the performance greatly. It is impossible to track multiple services in parallel and is impossible to automatically stop tracking the port status and save the resource overhead when the hosts, network management system or network is abnormal.

UK Patent Application GB2369911 A discloses a system for displaying device-status information comprising a display device, communication means, means for displaying, and means for modifying. Wherein the communication means is used to receiving device-status information including a file with a graphic representation. The graphic representation includes a set of fixed items and a set of status items. The means for displaying is used to produce a display screen with the fixed items and the status items. The means for modifying is used to modify a portion of the display screen when a new received set of device state information is different from the last one.

Internet Draft "Forwarding and Control Element Protocol (FACT) " draft-gopal-forces-fact-02.txt, Alex Audu, November 2002, discloses a distribution computer system comprising a switch having ports, wherein the switch comprises agent code that is operable to report status of the ports and identify a node coupled to the ports.

### Summary of the Invention

The embodiments of the present invention provide a method and a system for monitoring a device port to solve the problem that the existing port monitoring system is unable to monitor the designated port. And the embodiments of the present invention also provide an indicator status tracking module.

The embodiment of the present invention provides a device port monitoring system. The device port monitoring system includes a device management module, an indicator status tracking module coupled with a plurality of distributed device respectively. The device management module is configured to generate a list of ports according to a tracking condition. And the indicator status tracking module is configured to generate a tracking instruction according to the list of ports for tracking one or more specific ports of the plurality of distributed devices, send one or more specific device according to the specific ports a message to initiate an indicator status tracking task for the specific ports, and display a status of a specific ports returned by the specific devices.

In the system, the status of the specific port returned by the specific device includes a status change of the specific port.

In the system, the indicator status tracking module is further configured to stop the indicator status tracking task according to an instruction or a network status.

The system further includes a real-time message processing module. The real-time message processing module is used for converting a status change of the specific port into information that can be identified by the indicator status tracking module, and transferring the information to the indicator status tracking module for displaying in real time.

The system further includes a service information management module. The service information management module is used for obtaining associated information of the specific port according to the status received by the indicator status tracking module, and transmitting the information to the indicator status tracking module for displaying the associated information of the specific port.

The system further includes a timer. The timer is used for timing a handshake between the specific device and the indicator status tracking task initiated by the indicator status tracking module.

In the system, the indicator status tracking module includes a counter. The counter is initiated when the indicator status tracking module sends a handshake message to a device, increases or decreases number of the counter when the handshake between the indicator status tracking module and the device is failed, and resets when the handshake between the indicator status tracking module and the device is successful. And the indicator status tracking module stops the indicator status tracking task when counting of the counter achieves a designated value.

The embodiments of the present invention also provide a device port monitoring method, which includes the following processes of:
acquiring a list of ports according to a tracking condition for tracking one or more specific ports;
generating a tracking instruction according to the list of ports for tracking one or more specific ports and sending one or more specific devices according to the specific ports a message to initiate an indicator status tracking task for the specific ports; and
displaying a status of the specific ports returned by the specific devices.

In the method, the status of specific port is a status change of the specific port returned by the specific device.

In the method, the method further includes the process of: stopping the indicator status tracking task according to an instruction or network status.

In the method, the acquiring a list of ports according to for tracking one or more specific ports includes the following processes of:
receiving, by an indicator status tracking module, a tracking condition over a Graphic User Interface (GUI), and transferring the tracking condition to a device management module;
generating, by the device management module, the list of ports according to the tracking condition, and returning the list to the indicator status tracking module.

In the method, the generating the tracking instruction according to the list of ports for tracking one or more specific ports and sending to one or more specific devices according to the specific ports a message to initiate the indicator status tracking task includes the following processes of:
adding, by an indicator status tracking module, a tracking task in a tracking task list;
executing, by the indicator status tracking module, the tracking task of the tracking task list, generating an instruction and sending to the specific device a message to initiate the tracking task.

In the method, the method further includes the process of: initiating, by the indicator status tracking module, a timer, and initiating a handshake program between the indicator status tracking module and the specific device according to the timer.

In the method, the process for handshake program includes the following processes of:
initiating a counter for counting, when the indicator status tracking module sends a handshake message to a device;
increasing or decreasing number of the counter, when the handshake between the indicator status tracking module and the device is failed;
resetting number of the counter, when the handshake between the indicator status tracking module and the device is successful; and
stopping, by the indicator status tracking module, the indicator status tracking task when detecting that counting of the counter achieves a designated value.

The embodiments of the present invention provide an indicator status tracking module, and the indicator status tracking module includes:
a first unit, configured to generate a tracking instruction according to a list of ports related to a tracking condition for tracking one or more specific ports;
a second unit, configured to send one or more specific devices according to the specific ports a message to initiate an indicator status tracking task for the specific ports;
a third unit, configured to display a status of the specific port returned by the specific devices.

The indicator status tracking module further includes a fourth unit, which is configured to receive and display a status change of the specific port, and stop the indicator status tracking task according to an instruction or a network status.

The indicator status tracking module further includes a counter. The counter is initiated when the second unit sends a handshake message to a device, increases or decreases number of the counter when a handshake between the indicator status tracking module and the device is failed, and reset number of the counter when the handshake between the indicator status tracking module and the device is successful; and the fourth unit stops the indicator status tracking task when the number of the counter achieves a designated value.

The device port monitoring system and method in accordance with the embodiments of the present invention use a dynamic registration tracking task to reduce the port monitoring overhead, which makes it convenient to monitor a port. In this way, it is possible to guarantee the real-time tracking and effectively reduce the resource overhead in the case that the amount of port is enormous. In addition, the system further automatically stops an indicator status tracking task to save the resource overhead in the abnormal case of device failure, network management failure and network failure.

### Brief Description of the Drawings

Fig.1 is a schematic diagram illustrating the device port monitoring system in accordance with an embodiment of the present invention;
Fig.2 is a flowchart illustrating the device port monitoring method in accordance with an embodiment of the present invention;
Fig.3 is a schematic diagram illustrating the process of initiating an indicator status tracking in accordance with the embodiment of the present invention;
Fig.4 is a schematic diagram illustrating the process of stopping an indicator status tracking in accordance with the embodiment of the present invention;
Fig.5 is a schematic diagram illustrating the process of reporting an indicator status change in accordance with the embodiment of the present invention;
Fig.6 is a schematic diagram illustrating the process of acquiring the related port information in accordance with the embodiment of the present invention;
Fig.7 is a schematic diagram illustrating the normal handshake process between the indicator status tracking module and a device in accordance with the embodiment of the present invention;
Fig.8 is a schematic diagram illustrating the abnormal handshake process between the indicator status tracking module and a device in accordance with the embodiment of the present invention.

### Detailed Description of the Invention

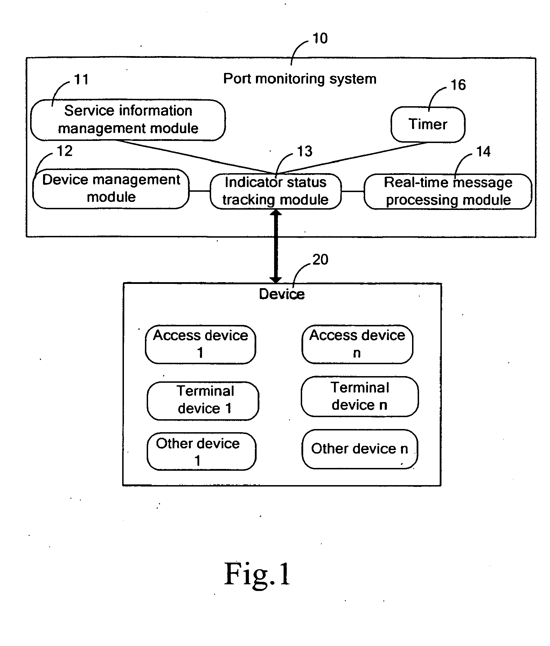

Fig.1 is a schematic diagram illustrating the device port monitoring system in accordance with an embodiment of the present invention. Port monitoring system 10 includes Indicator status tracking module 13, Service information management module 11, Device management module 12, Real-time message processing module 14 and Timer 16 Indicator status tracking module 13 is connected with Service information management module 11, Device management module 12, Real-time message processing module 14 and Timer 16 respectively. In addition, Indicator status tracking module 13 is communicatively connected with multiple Device 20 (only one Device 20 is shown in Fig. 1) which may be distributed at different places. Each Device 20 may include multiple ports by which Device 20 may be connected with different function devices (for example an access device, a terminal device or other devices) so as to implement the mutual connections of these function devices.

Device management module 12 implemented by retrieving a port database, may generate a list of port according to a tracking condition. Indicator status tracking module 13 includes a Graphic User Interface (GUI) by which Indicator status tracking module 13 may receive the tracking condition (for example, designating to track the port of a specific frame and a specific telephone number segment) or initiate/stop a command for indicator status tracking; the interface may display the indicator status of port by means of the icon form, and the different statuses of indicator may be displayed by different colors in this embodiment. Indicator status tracking module 13 may transfer the received tracking condition to Device management module 12 and generate an instruction according to the list of port returned from Device management module 12, and send a message to a specific device including the corresponding port to initiate or stop the indicator status tracking; the sent information may be determined according to the user requirement, for example the currently-used Simple Network Management Protocol (SNMP) message. Practically, the system and method of the embodiment of the present invention may also be implemented by means of other protocol messages, and is not limited in the embodiment of the present invention. The description is given in the following embodiments of the present invention by taking the SNMP protocol as an example. Device 20 may send to Indicator status tracking module 13 the status of the corresponding port according to the received SNMP message, establish a tracking task list, return the change of port to Indicator status tracking module 13 when the status of the corresponding port is changing. Indicator status tracking module 13 communicates with Device 20 by means of the handshake mode.

Service information management module 11 may retrieve the detailed information associated with the specific port, for example telephone number, configured service type, L3/EF address, terminal type, terminal ID and port name, etc. corresponding to the port; the port properties corresponding to different port types may be different; Service information management module 11 may be implemented by retrieving the corresponding service database. Real-time message processing module 14 may notify Indicator status tracking module 13 of the indicator status change when the indicator status of one port is changing, so that Indicator status tracking module 13 may change the color display of the corresponding port indicator. The reason for directly receiving Trap by Real-time message processing module 14 instead of receiving Trap by Indicator status tracking module 13 is that: there are several types of Trap for one network management system, and the port status change Trap is only one type of the Trap, it is simpler and more effective to use one uniform real-time message processing model to handle the reception or explanation or classification or distribution of these Traps.

Indicator status tracking module 13 includes a counter (not shown in the Figs). The counter initiates a counting when Indicator status tracking module 13 sends an SNMP message to a device, number of the counter adds 1 when the handshake between Indicator status tracking module 13 and Device 20 is failed, and the number of the counter resets when the handshake between Indicator status tracking module 13 and Device 20 is successful. When detecting that the number of the counter achieves a designated value (i.e. the failed handshake exceeds a designated time), Indicator status tracking module 13 stops the corresponding indicator status tracking task and deletes the corresponding tracking task from the tracking task list because the network or the corresponding Device 20 fails at this time. Timer 16 may also be connected with Indicator status tracking module 13 so as to time the timing handshake of multiple tracking tasks thereof.

Service information management module 11, Device management module 12 and Real-time message processing module 14 may be respectively implemented by means of hardware, software or the combination of hardware and software.

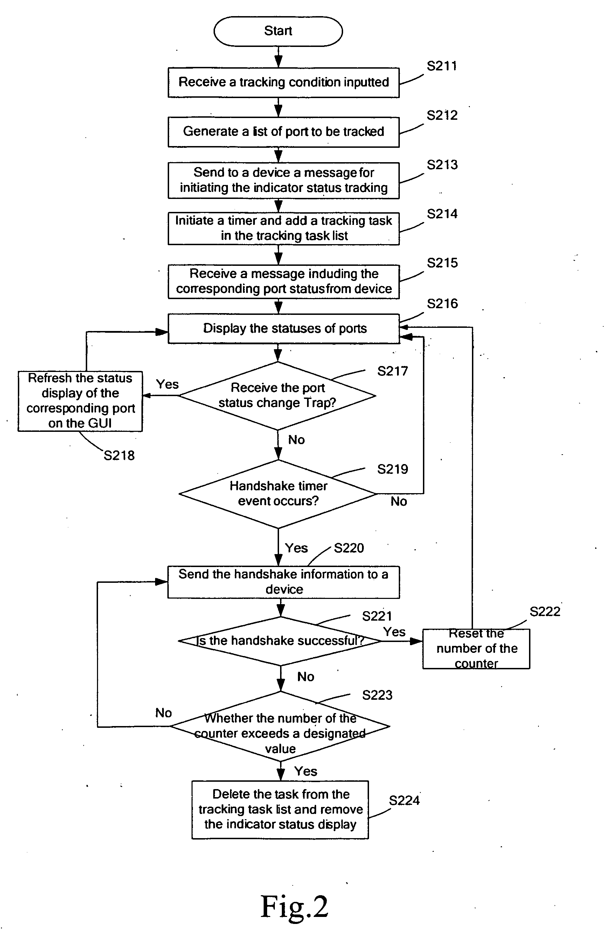

Fig.2 is a flowchart illustrating the device port monitoring method in accordance with an embodiment of the present invention. At first, Indicator status tracking module 13 receives a tracking condition inputted by a GUI and sends the tracking condition to Device management module 12 (S211); Device management module 12 generates a list of port to be tracked according to the tracking condition and returns the list to Indicator status tracking module 13 (S212). Indicator status tracking module 13 generates an instruction according to the returned list of port so as to send an SNMP message to a specific device including the corresponding port so as to initiate the indicator status tracking (S213). At the same time, Indicator status tracking module 13 initiates a timer and adds the tracking task in the tracking task list by which Indicator status tracking module 13 may simultaneously initiate multiple tracking tasks (S214).

Indicator status tracking module 13 receives a message including the corresponding port status from Device 20 (S215), and displays the statuses of these ports on a GUI by means of the corresponding icons, i.e. the different statuses of ports are indicated by means of the different icon colors (S216), the message may be an SNMP message.

Device 20 may also generate its own tracking task list according to the SNMP message received from Indicator status tracking module 13, and send the indicator status change Trap to Indicator status tracking module 13 when the corresponding port status is changing. When receiving a message from a device, Indicator status tracking module 13 determines whether it is a port status change Trap (S217). If receiving the port status change Trap, Indicator status tracking module 13 refreshes the status display of the corresponding port on the GUI (S218), and returns to S216. At this point, Timer 16 may also periodically detect and determine whether to initiate a handshake program between Indicator status tracking module 13 and Device 20 (S219). The handshake program may be initiated according to a designated condition. For example: the designated condition may include: tracking the port status of the port in designated frame; tracking the port status of the port in designated telephone number segment; only tracking the status of PSTN port, or tracking the port status of the combination of them. If the handshake timer event occurs, Indicator status tracking module 13 sends to Device 20 the handshake information (S220), otherwise returns to S216. If the handshake is successful (S221), i.e. Indicator status tracking module 13 receives the response returned by Device 20, Indicator status tracking module 13 resets the number of the counter (S222), and returns to S216. If receiving no response from the device within the designated time period, Indicator status tracking module 13 makes the number of the counter add 1, and transmits the handshake information again. Indicator status tracking module 13 detects whether the number of the counter exceeds a designated value (S223). If the number of the counter exceeds the designated value, it is indicated that the network may fails; Indicator status tracking module 13 stops the indicator status tracking task, deletes the task from the tracking task list, and removes the indicator status display on the GUI (S224). If the number of the counter does not exceed the designated value, return to S220.

Service information management module 11 may be used to acquire the detailed information associated with a specific port (not shown in Fig.2), for example telephone number, configured service type, L3/EF address, terminal type, terminal ID and port name etc corresponding to a port.

In addition, Indicator status tracking module 13 may also acquire the corresponding port status by initiatively polling the device port status. The polling time interval may be set according to the requirement; if the polling time interval is long (for example several seconds per time), however, it is impossible to guarantee the real-time; if the polling time interval is short, it is possible to lead to a serious performance problem of the network management system, and devices and the network management system are unable to work normally.

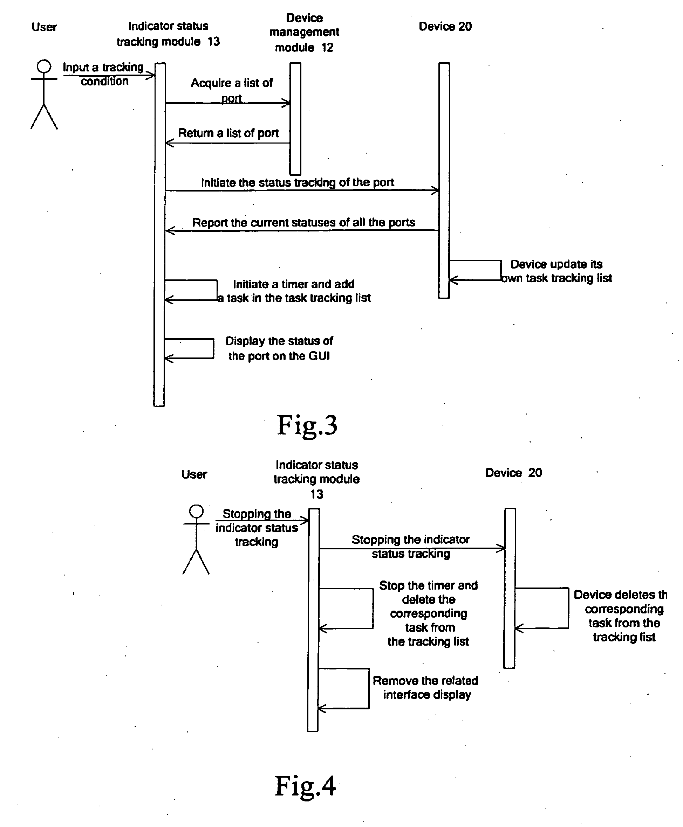

Fig.3 is a schematic diagram illustrating the process of initiating an indicator status tracking in accordance with the embodiment of the present invention. At first, Indicator status tracking module 13 receives a filtering condition (for example initiating a tracking of port in a frame of a device) for initiating the tracking by means of a Graphic User Interface (GUI), and delivers a command for initiating the indicator status tracking. Indicator status tracking module 13 acquires a list of port which meets a designated condition from Device management module 12. Indicator status tracking module 13 sends to Device 20 an SNMP message to initiate the status tracking of the port meeting the designated condition. Device 20 establishes its own tracking task list, and reports the current statuses of all the ports meeting the designated condition by means of Trap. At the same time, Indicator status tracking module 13 initiates a handshake timer, and adds a tracking task in the tracking task list. Indicator status tracking module 13 displays the list of tracked port on a GUI, and displays the current status of the corresponding port by means of the different color icons.

Fig.4 is a schematic diagram illustrating the process of stopping an indicator status tracking in accordance with the embodiment of the present invention. At first, Indicator status tracking module 13 receives a command for stopping the indicator status tracking by means of GUI. Indicator status tracking module 13 sends to Device 20 a command for stopping the indicator status tracking. Device 20 stops the tracking for the corresponding port status, and can not send Trap to the network management system even though the port status is changing. Indicator status tracking module 13 stops the handshake timer, and deletes the corresponding item of the tracking task list. Indicator status tracking module 13 removes the related interface display.

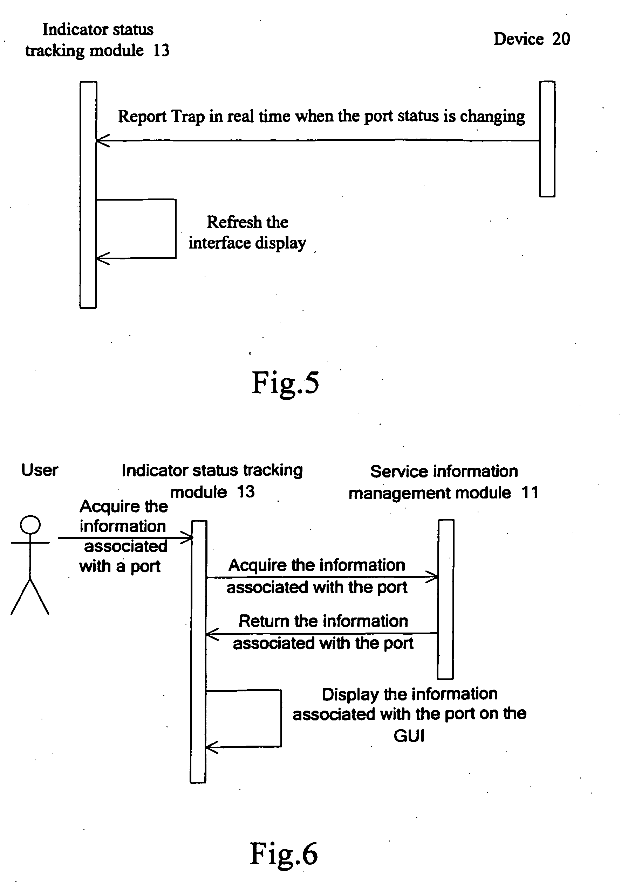

Fig.5 is a schematic diagram illustrating the process of reporting an indicator status change in accordance with the embodiment of the present invention. When it is detected that the status of the tracked port is changing, Device 20 sends the status change to Indicator status tracking module 13. Real-time message processing module 14 notifies Indicator status tracking module 13 of the fact that the status of a port is changing. Indicator status tracking module 13 refreshes the interface display, and represents the current status of the corresponding port by means of the designated color icon.

Fig.6 is a schematic diagram illustrating the process of acquiring the related port information in accordance with the embodiment of the present invention. It is possible to click a port indicator icon on the GUI of Indicator status tracking module 13 to indicate the acquiring the detailed information associated with the port. Indicator status tracking module 13 sends Service information management module 11 a command for acquiring the detailed information of the designated port. Service information management module 11 returns the detailed information of the corresponding port to Indicator status tracking module 13. Indicator status tracking module 13 displays the detailed port information on the GUI.

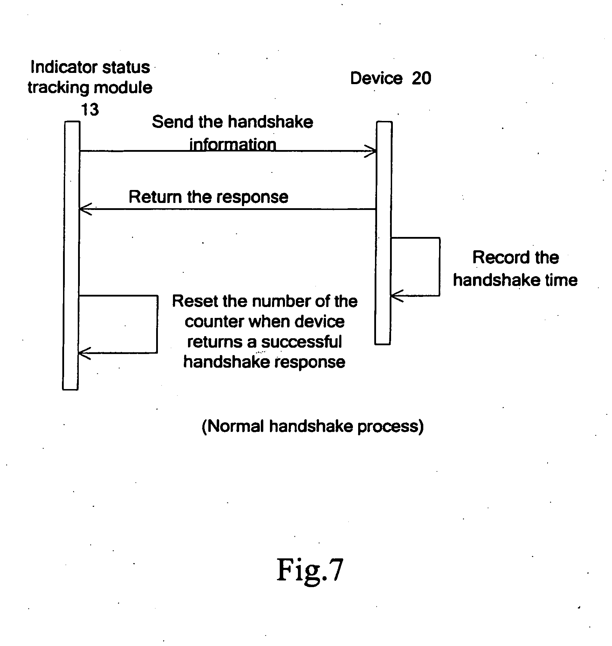

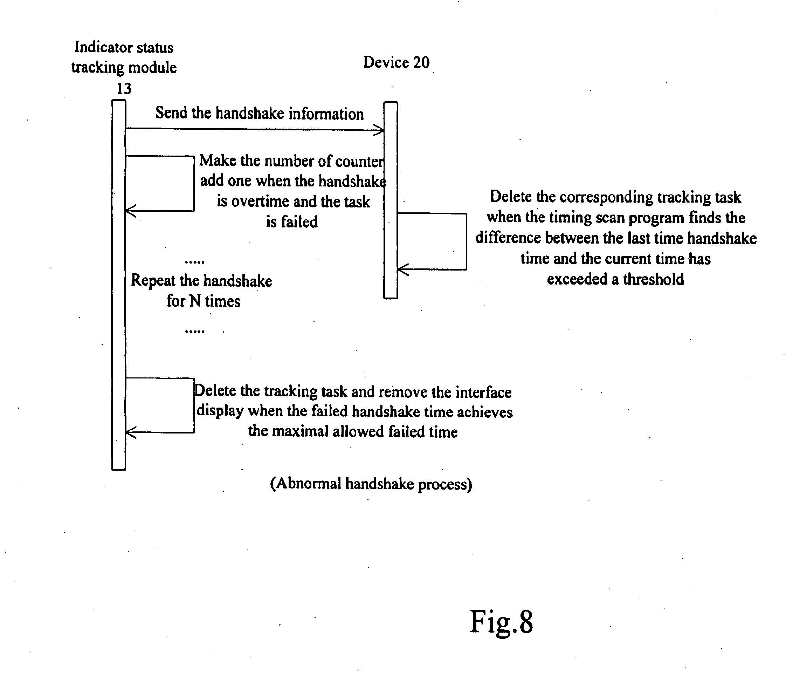

Fig.7 and Fig.8 are schematic diagrams illustrating the handshake process between the indicator status tracking module and a device in accordance with the embodiment of the present invention. When the timer periodicity event set in Indicator status tracking module 13 occurs, Indicator status tracking module 13 sends to Device 20 an SNMP message to initiate a handshake program. If Device 20 returns a successful handshake response, Indicator status tracking module 13 resets the number of the counter; if Device 20 gives no response within the designated overtime period, Indicator status tracking module 13 makes the number of the counter add one. If the failed handshake times exceed a designated times, it is determined that the tracking task abnormally is interrupted (for example the network fails); Indicator status tracking module 13 stops the handshake timer, deletes the corresponding item of the tracking task list and removes the corresponding interface display. For an initiated tracking task, if receiving no handshake information sent by Indicator status tracking module 13 within a designated time period (>= the handshake overtime period at the network management side multiplied by the maximal allowed failure times), Device 20 determines that the tracking command is invalid, then stops the indicator status tracking task, and does not send status change Trap of the corresponding port to Indicator status tracking module 13 any more.

## Claims

1. A device port monitoring system (10), comprising:
a device management module (12), an indicator status tracking module (13) coupled with a plurality of distributed devices (20) respectively, and
the device management module (12) is configured to generate a list of ports according to a tracking condition;
the indicator status tracking module (13) is configured to generate a tracking instruction according to the list of ports for tracking one or more specific ports of the plurality of distributed devices (20), and send one or more specific devices (20) according to the specific ports a message to initiate an indicator status tracking task for the specific ports; and
display a status of the specific ports returned by the specific devices (20).

2. The system of claim 1, wherein the status of the specific port returned by the specific device (20) comprises a status change of the specific port.

3. The system of claim 1, wherein the indicator status tracking module (13) is further configured to stop the indicator status tracking task according to an instruction or a network status.

4. The system of claim 1, further comprising:
a real-time message processing module (14), for converting a status change of the specific port into information that can be identified by the indicator status tracking module (13), and transferring the information to the indicator status tracking module (13) for displaying in real time.

5. The system of claim 1, further comprising:
a service information management module (11), for obtaining associated information of the specific port according to the status received by the indicator status tracking module (13), and transmitting the information to the indicator status tracking module (13) for displaying the associated information of the specific port.

6. The system of any one of claims 1 to 5, further comprising:
a timer (16), for timing a handshake between the specific device (20) and the indicator status tracking task initiated by the indicator status tracking module (13).

7. The system of claim 6, wherein the indicator status tracking module (13) comprises:
a counter, being initiated when the indicator status tracking module (13) sends a handshake message to a device, increasing or decreasing number of the counter when the handshake between the indicator status tracking module (13) and the device is failed, and resetting when the handshake between the indicator status tracking module (13) and the device is successful; and
the indicator status tracking module (13) stops the indicator status tracking task when counting of the counter achieves a designated value.

8. A device port monitoring method comprising:
acquiring a list of ports according to a tracking condition for tracking one or more specific ports (S211);
generating a tracking instruction according to the list of ports for tracking one or more specific ports and sending one or more specific devices according to the specific ports a message to initiate an indicator status tracking task for the specific ports (S213); and
displaying a status of the specific ports returned by the specific devices (S216).

9. The method of claim 8, wherein the status of specific port is a status change of the specific port returned by the specific device.

10. The method of claim 8, further comprising:
stopping the indicator status tracking task according to an instruction or network status.

11. The method of claim 8, wherein the acquiring a list of ports according to a tracking condition for tracking one or more specific ports comprises:
receiving (S211), by an indicator status tracking module, a tracking condition over a Graphic User Interface, GUI, and transferring the tracking condition to a device management module;
generating (S212), by the device management module, the list of ports according to the tracking condition, and returning the list to the indicator status tracking module.

12. The method of claim 8, wherein the generating the tracking instruction according to the list of ports for tracking one or more specific ports and sending one or more specific devices according to the specific ports a message to initiate the indicator status tracking task comprises:
adding, by an indicator status tracking module, a tracking task in a tracking task list;
executing, by the indicator status tracking module, the tracking task of the tracking task list, generating an instruction and sending to the specific device a message to initiate the tracking task.

13. The method of claim 12, further comprising: initiating, by the indicator status tracking module, a timer, and initiating a handshake program between the indicator status tracking module and the specific device (S214) according to the timer.

14. The method of claim 13, wherein the process for handshake program comprises:
initiating a counter for counting, when the indicator status tracking module sends a handshake message to a device;
increasing or decreasing number of the counter, when the handshake between the indicator status tracking module and the device is failed;
resetting (S222) number of the counter, when the handshake between the indicator status tracking module and the device is successful; and
stopping (S224), by the indicator status tracking module, the indicator status tracking task when detecting that counting of the counter achieves a designated value.

15. An indicator status tracking module, comprising:
a first unit configured to generate a tracking instruction according to a list of ports related to a tracking condition for tracking one or more specific ports;
a second unit configured to send one or more specific devices according to the specific ports a message to initiate an indicator status tracking task for the specific ports; and
a third unit configured to display a status of the specific ports returned by the specific devices.

16. The indicator status tracking module of claim 15, further comprising:
a fourth unit configured to receive and display a status change of the specific port, and stop the indicator status tracking task according to an instruction or a network status.

17. The indicator status tracking module of claim 16, further comprising:
a counter, which is initiated when the second unit sends a handshake message to a device, increases or decreases number of the counter when a handshake between the indicator status tracking module and the device is failed, and reset number of the counter when the handshake between the indicator status tracking module and the device is successful;
wherein the fourth unit stops the indicator status tracking task when the number of the counter achieves a designated value.

## Patentansprüche

1. Geräteportüberwachungssystem (10), umfassend:
ein Vorrichtungsverwaltungsmodul (12), ein Anzeigerstatus-Nachverfolgemodul (13), das mit einer Vielzahl von verteilten Vorrichtungen (20) entsprechend gekoppelt ist, und
wobei
das Vorrichtungsverwaltungsmodul (12) konfiguriert ist, um eine Liste von Ports gemäß einer Nachverfolge-Bedingung zu erzeugen;
das Anzeigerstatus-Nachverfolgemodul (13) konfiguriert ist, um eine Nachverfolge-Anweisung gemäß der Port-Liste zum Verfolgen eines oder mehrerer spezifischer Ports der Vielzahl von verteilten Vorrichtungen (20) zu erzeugen, und um einer oder mehrerer der bestimmten Vorrichtungen eine Nachricht zu senden, um eine Anzeigerstatus-Nachverfolgeaufgabe für die bestimmten Ports auszulösen; und Anzeigen eines Status der bestimmten Ports, die von den bestimmten Vorrichtungen (20) erwidert wurden.

2. System nach Anspruch 1, wobei der Status des bestimmten Ports, der von der bestimmten Vorrichtung (20) erwidert wurde, eine Statusänderung des bestimmten Ports umfasst.

3. System nach Anspruch 1, wobei das Anzeigerstatus-Nachverfolgemodul (13) ferner konfiguriert ist, um die Anzeigerstatus-Nachverfolgeaufgabe gemäß einer Anweisung oder einem Netzwerkstatus zu unterbrechen.

4. System nach Anspruch 1, ferner umfassend:
ein Echtzeitnachrichten-Verarbeitungsmodul (14), um eine Statusänderung des bestimmten Ports in Informationen zu konvertieren, die durch das Anzeigerstatus-Nachverfolgemodul (13) identifiziert werden können, und
Übertragen der Information an das Anzeigerstatus-Nachverfolgemodul (13) zur Anzeige in Echtzeit.

5. System nach Anspruch 1, ferner umfassend:
ein Dienst-Informationsverwaltungsmodul (11) zum Erhalten von mit dem bestimmten Port verbundenen Informationen gemäß dem Status, der von dem Anzeigerstatus-Nachverfolgemodul (13) empfangen wurde, und Übertragen der Information an das Anzeigerstatus-Nachverfolgemodul (13) zum Anzeigen der mit dem bestimmten Port verbundenen Informationen.

6. System nach irgendeinem der Ansprüche 1 bis 5, ferner umfassend:
einen Zeitnehmer (16) zur Zeitnahme eines Quittungsaustauschs zwischen der spezifischen Vorrichtung (20) und der Anzeigerstatus-Nachverfolgeaufgabe, die durch das Anzeigerstatus-Nachverfolgemodul (13) ausgelöst wurde.

7. System nach Anspruch 6, wobei das Anzeigerstatus-Nachverfolgemodul (13) umfasst:
einen Zähler, der ausgelöst wird, wenn das Anzeigerstatus-Nachverfolgemodul (13) eine Quittungsaustausch-Nachricht an eine Vorrichtung sendet, wobei die Anzahl der Zähler anwächst oder sich verringert, wenn der Quittungsaustausch zwischen dem Anzeigerstatus-Nachverfolgemodul (13) und der Vorrichtung fehlschlagen und Zurücksetzen, wenn der Quittungsaustausch zwischen dem Anzeigerstatus-Nachverfolgemodul (13) und der Vorrichtung erfolgreich ist; und wobei das Anzeigerstatus-Nachverfolgemodul (13) die Anzeigerstatus-Nachverfolgeaufgabe unterbricht, wenn der Zähler einen vorgegebenen Wert erreicht.

8. Geräteportüberwachungsverfahren, umfassend:
Abfragen einer Liste von Ports gemäß einer Quittungsaustausch-Bedingung zum Verfolgen eines oder mehrerer spezifischer Ports (S211);
Erzeugen einer Quittungsaustausch-Anweisung gemäß der Liste von Ports zum Verfolgen eines oder mehrerer spezifischer Ports und Senden einer Nachricht gemäß der spezifischen Ports an eine oder mehrere der spezifischen
Vorrichtungen, um eine Anzeigerstatus-Nachverfolgeaufgabe für die spezifischen Ports (S213) auszulösen; und
Anzeigen eines Status der spezifischen Ports, die von den spezifischen Vorrichtungen erwidert werden (S216).

9. Verfahren nach Anspruch 8, wobei der Status der spezifischen Ports eine Statusänderung der spezifischen Ports, die von der spezifischen Vorrichtung erwidert werden, umfasst ist.

10. Verfahren nach Anspruch 8, ferner umfassend:
Unterbrechen der Anzeigerstatus-Nachverfolgeaufgabe gemäß einer Anweisung oder einem Netzwerkstatus.

11. Verfahren nach Anspruch 8, wobei das Abfragen einer Liste von Ports gemäß einer Nachverfolge-Bedingung zum Verfolgen eines oder mehrerer spezifischer Ports umfasst:
Empfangen (S211) mittels eines Anzeigerstatus-Nachverfolgemodul eine Nachverfolge-Bedingung über eine grafische Bedienoberfläche, GUI, und Übertragen der Nachverfolge-Bedingung an ein Vorrichtungsverwaltungsmodul;
Erzeugen (S212) mittels des Vorrichtungsverwaltungsmoduls die Liste an Ports gemäß der Nachverfolge-Bedingung, und Zurücksenden der Liste an das Anzeigerstatus-Nachverfolgemodul.

12. Verfahren nach Anspruch 8, wobei das Erzeugen der Nachverfolge-Anweisung gemäß der Liste an Ports zum Verfolgen eines oder mehrerer spezifischer Ports und um einer oder mehreren spezifischen Vorrichtungen gemäß der spezifischen Ports eine Nachricht zu senden, um die Anzeigerstatus-Nachverfolgeaufgabe auszulösen, umfasst:
Hinzufügen einer Nachverfolge-Aufgabe mittels eines Anzeigerstatus-Nachverfolgemoduls in einer Nachverfolge-Aufgabenliste;
Ausführen der Nachverfolge-Aufgabe der Nachverfolge-Aufgabenliste mittels des Anzeigerstatus-Nachverfolgemoduls, Erzeugen einer Anweisung und Übersenden einer Message an die spezifische Vorrichtung, um die Nachverfolge-Aufgabe auszulösen.

13. Verfahren nach Anspruch 12, ferner umfassend:
mittels des Anzeigerstatus-Nachverfolgemoduls Auslösen einer Zeitnahme und Auslösen eines Quittungsaustauschs-Programms zwischen dem Anzeigerstatus-Nachverfolgemodul und der spezifischen Vorrichtung (S214) gemäß dem Zeitnehmer.

14. Verfahren nach Anspruch 13, wobei der Vorgang für Quittungsaustausch-Programme umfasst: in Gang setzen einer Zählvorrichtung zum Zählen, wenn das Anzeigerstatus-Nachverfolgemodul eine Quittungsaustausch-Nachricht an eine Vorrichtung sendet;
Erhöhen oder Verringern einer Anzahl der Zähler, wenn der Quittungsaustausch zwischen dem Anzeigerstatus-Nachverfolgemodul und der Vorrichtung fehlschlägt;
Zurücksetzen (S222) der Anzahl der Zähler, wenn der Quittungsaustausch zwischen dem Anzeigerstatus-Nachverfolgemodul und der Vorrichtung erfolgreich ist; und
Unterbrechen (S224) der Anzeigerstatus-Nachverfolgeaufgabe mittels des Anzeigerstatus-Nachverfolgemoduls, wenn ermittelt wird, dass das Zählen der Zähler einen vorgegebenen Wert überschreitet.

15. Anzeigerstatus-Nachverfolgemodul, umfassend:
eine erste Einheit, die konfiguriert ist, um eine Nachverfolge-Anweisung gemäß einer Liste von Ports, die mit Nachverfolge-Bedingungen zum Verfolgen eines oder mehrerer spezifischer Ports gekoppelt ist;
eine zweite Einheit, die konfiguriert ist, um einer oder mehreren spezifischen Vorrichtungen gemäß den spezifischen Ports eine Nachricht zum Auslösen einer Anzeigerstatus-Nachverfolgegaufgabe für die spezifischen Ports zu übersenden;
und
eine dritte Einheit, die konfiguriert ist, um einen Status der spezifischen Ports, die durch die spezifischen Vorrichtungen erwidert werden, anzuzeigen.

16. Anzeigerstatus-Nachverfolgemodul nach Anspruch 15, ferner umfassend:
eine vierte Einheit, die konfiguriert ist, um eine Statusänderung des spezifischen Ports anzuzeigen und zu empfangen, und die Anzeigerstatus-Nachverfolgeaufgabe gemäß einer Anweisung oder einem Netzwerkstatus zu unterbrechen.

17. Anzeigerstatus-Nachverfolgemodul nach Anspruch 16, ferner umfassend: eine Zählvorrichtung, die ausgelöst wird, wenn die zweite Einheit eine Quittungsaustausch-Nachricht an eine Vorrichtung sendet, die eine Anzahl der Zähler verringert oder erhöht, wenn ein Quittungsaustausch zwischen dem Anzeigerstatus-Nachverfolgemodul und der Vorrichtung fehlschlägt, und eine Anzahl der Zähler zurücksetzt, wenn der Quittungsaustausch zwischen dem Anzeigerstatus-Nachverfolgemodul und der Vorrichtung erfolgreich ist; wobei die vierte Einheit die Anzeigerstatus-Nachverfolgeaufgabe unterbricht, wenn die Anzahl der Zähler einen vorgegebenen Wert erreicht.

## Revendications

1. Système de surveillance d'un port de dispositif (10) comprenant:
un module de gestion de dispositifs (12), un module de poursuite de l'état indicateur (713) couplé à plusieurs dispositifs distribués (20), respectivement et
le module de gestion de dispositifs (12) est configuré pour produire une liste de ports selon une condition de poursuite;
le module de poursuite de l'état indicateur (13) est configuré pour produire une instruction de poursuite selon la liste de ports pour poursuivre un ou plusieurs ports spécifiques de la pluralité de dispositifs distribués (20), et pour envoyer à un ou plusieurs dispositifs spécifiques (20) selon les ports spécifiques un message pour initier une tache de poursuite de l'état indicateur pour les ports spécifiques; et
afficher un état des ports spécifiques renvoyé par les dispositifs spécifiques (20).

2. Système selon la revendication 1, dans lequel l'état du port spécifique renvoyé par le dispositif spécifique (20) comprend un changement d'état du port spécifique.

3. Système selon la revendication 1, dans lequel le module de poursuite de l'état indicateur (13) est en outre configuré pour arrêter la tâche de poursuite de l'état indicateur selon une instruction ou un état du réseau.

4. Système selon la revendication 1, comprenant en outre:
un module de traitement de message en temps réel (14) pour convertir un changement d'état du port spécifique en information qui peut être identifiée par un module de poursuite de l'état indicateur (13) et transférer l'information au module de poursuite de l'état indicateur (13) pour l'affichage en temps réel.

5. Système selon la revendication 1, comprenant en outre:
un module de gestion d'information de service (11) pour obtenir l'information associée du port spécifique selon l'état reçu par le module de poursuite de l'état indicateur (13) et transmettre l'information au module de poursuite de l'état indicateur (13) pour l'affichage de l'information associée du port spécifique.

6. Système selon l'une quelconque des revendications 1 à 5, comprenant en outre:
une horloge (16) pour le positionnement dans le temps de l'établissement d'une liaison entre le dispositif spécifique (20) et la tâche de poursuite de l'état indicateur initiée par le module de poursuite de l'état indicateur (13).

7. Système selon la revendication 6, dans lequel le module de poursuite de l'état indicateur (13) comprenant:
un compteur, qui est initié lorsque le module de poursuite de l'état indicateur (13) transmet un message d'établissement d'une liaison à un dispositif, augmentant ou diminuant le nombre du compteur lorsque l'établissement d'une liaison entre le module de poursuite de l'état indicateur (13) et le dispositif est défaillant, et une remise à l'état initial lorsque l'établissement d'une liaison entre le module de poursuite de l'état indicateur (13) et le dispositif réussit; et
le module de poursuite de l'état indicateur (13) arrête la tâche de poursuite de l'état indicateur lorsque le comptage du compteur atteint une valeur désignée.

8. Procédé de surveillance d'un port de dispositif comprenant:
acquérir une liste de ports selon une condition de poursuite pour poursuivre un ou plusieurs ports spécifiques (S211);
produire une instruction de poursuite selon la liste de ports pour poursuivre un ou plusieurs ports spécifiques et pour transmettre à un ou plusieurs dispositifs spécifiques selon les ports spécifiques un message pour initier une tâche de poursuite de l'état indicateur pour les ports spécifiques (S213); et
afficher un état des ports spécifiques renvoyé par les dispositifs spécifiques (S216).

9. Procédé selon la revendication 8, dans lequel l'état du port spécifique est un changement d'état du port spécifique renvoyé par le dispositif spécifique.

10. Procédé selon la revendication 8, comprenant en outre:
arrêter la tâche de poursuite de l'état indicateur selon une instruction ou un état du réseau.

11. Procédé selon la revendication 8, dans lequel l'acquisition d'une liste de ports selon une condition de poursuite pour poursuivre un ou plusieurs ports spécifiques comprend:
recevoir (S211), par un module de poursuite de l'état indicateur, une condition de poursuite par une interface graphique utilisateur, GUI, et transférer la condition de poursuite à un module de gestion de dispositifs;
produire (S212), par le module de gestion de dispositifs, la liste de ports selon la condition de poursuite, et retourner la liste au module de poursuite de l'état indicateur.

12. Procédé selon la revendication 8, dans lequel la production de l'instruction de poursuite selon la liste de ports pour poursuivre un ou plusieurs ports spécifiques et pour envoyer à un ou plusieurs dispositifs spécifiques selon les ports spécifiques un message pour initier la tâche de poursuite de l'état indicateur comprend:
ajouter, par un module de poursuite de l'état indicateur, une tâche de poursuite dans une liste de tâches de poursuite;
exécuter, par le module de poursuite de l'état indicateur, la tâche de poursuite de la liste de tâches de poursuite, produire une instruction et transmettre au dispositif spécifique un message pour initier la tâche de poursuite.

13. Procédé selon la revendication 12, comprenant en outre:
initier, par le module de poursuite de l'état indicateur, une horloge, et initier un programme d'établissement d'une liaison entre le module de poursuite de l'état indicateur et le dispositif spécifique (S214) selon l'horloge.

14. Procédé selon la revendication 13, dans lequel le processus pour le programme de l'établissement d'une liaison comprend:
initier un compteur pour compter, lorsque le module de poursuite de l'état indicateur transmet un message d'établissement d'une liaison à un dispositif;
augmenter ou diminuer le nombre du compteur lorsque l'établissement d'une liaison entre le module de poursuite de l'état indicateur et le dispositif est défaillant;
remettre à l'état initial (S222) le nombre du compteur lorsque l'établissement d'une liaison entre le module de poursuite de l'état indicateur et le dispositif réussit; et
arrêter (S224), par le module de poursuite de l'état indicateur, la tâche de poursuite de l'état indicateur lors de la détection que le comptage du compteur atteint une valeur désignée.

15. Module de poursuite de l'état indicateur comprenant:
une première unité configurée pour produire une instruction de poursuite selon une liste de ports liés à une condition de poursuite pour suivre un ou plusieurs ports spécifiques;
une deuxième unité configurée pour transmettre à un ou plusieurs dispositifs spécifiques selon les ports spécifiques un message pour initier une tâche de poursuite de l'état indicateur pour les ports spécifiques; et
une troisième unité configurée pour afficher un état des ports spécifiques renvoyé par les dispositifs spécifiques.

16. Module de poursuite de l'état indicateur selon la revendication 15, comprenant en outre:
une quatrième unité configurée pour recevoir et afficher un changement d'état du port spécifique et pour arrêter la tâche de poursuite de l'état indicateur selon une instruction ou un état du réseau.

17. Module de poursuite de l'état indicateur selon la revendication 16, comprenant en outre:
un compteur, qui est initié lorsque la deuxième unité transmet un message d'établissement d'une liaison à un dispositif, augmente ou diminue le nombre du compteur lorsque l'établissement d'une liaison entre le module de poursuite de l'état indicateur et le dispositif est défaillant, et remet à l'état initial le nombre du compteur lorsque l'établissement d'une liaison entre le module de poursuite de l'état indicateur et le dispositif réussit;
où la quatrième unité arrête la tâche de poursuite de l'état indicateur lorsque le nombre du compteur atteint une valeur désignée.
